**Europäisches Patentamt**

**European Patent Office**

**Office européen des brevets**

(11) Veröffentlichungsnummer: **0 195 215**
**B1**

(12) **EUROPÄISCHE PATENTSCHRIFT**

(45) Veröffentlichungstag der Patentschrift:
**29.08.90**

(21) Anmeldenummer: **86101458.7**

(22) Anmeldetag: **05.02.86**

(51) Int. Cl.⁵: **B29C 53/10, B29C 47/00**
**// B29L23:00**

(54) Flachlege- und Abzugsvorrichtung für im Blasverfahren hergestellte Kunststoffschlauchfolienbahnen.

(30) Priorität: **11.03.85 DE 3508626**

(43) Veröffentlichungstag der Anmeldung:
**24.09.86 Patentblatt 86/39**

(45) Bekanntmachung des Hinweises auf die Patenterteilung:
**29.08.90 Patentblatt 90/35**

(84) Benannte Vertragsstaaten:
**AT CH FR GB IT LI SE**

(56) Entgegenhaltungen:
**DE-A- 2 547 699**
**US-A- 3 768 949**

(73) Patentinhaber: **Windmöller & Hölscher,**
**Münsterstrasse 48-52, D-4540 Lengerich i.W.(DE)**

(72) Erfinder: **Dellbrügge, Herbert, Wüstenei 13,**
**D-4540 Lengerich(DE)**

(74) Vertreter: **Gossel, Hans, Dipl.-Ing. et al, Rechtsanwälte**
**E. Lorenz - B. Seidler M. Seidler - Dipl.-Ing. H. K. Gossel**
**Dr. I. Philipps - Dr. P.B. Schäuble Dr. S. Jackermeier**
**Widenmayerstrasse 23, D-8000 München 22(DE)**

ACTORUM AG

## Beschreibung

Die Erfindung betrifft eine Flachlege- und Abzugsvorrichtung für im Blasverfahren von einem ortsfest angeordneten Folienblaskopf hergestellte Kunststoffschlauchfolienbahnen, deren Flachlegeplatten und Abquetschwalzen über mindestens annähernd 360° reversierend um die Achse des zugeführten Folienschlauches schwenkbar sind, wobei zwischen den Flachlegeplatten und Abquetschwalzen einerseits und dem ortsfesten Vorzugswalzenpaar andererseits mindestens zwei Umlenkwalzen zum Umlenken der Bahn um etwa 180° und zwei Wendestangen zum Umlenken der Bahn um etwa 180° unter gleichzeitiger Richtungsänderung hintereinander und miteinander abwechselnd auf um die Drehachse der Flachlegeplatten gegeneinander verschwenkbaren Trägern derart gelagert sind, daß die Achsen der Umlenkwalzen und der Wendestangen tangential zu Kreisen um die Drehachse der Flachlegeplatten verlaufen, wobei die Umlenkwalzen sich in jeder möglichen Betriebsstellung radial außerhalb der von der Bahn umschlungenen Teile der Wendestangen befinden, wobei die Schwenkwinkel der Umlenkwalzen bzw. Wendestangen mit steigender Entfernung von den Abzugswalzen abnehmen und wobei der Folienschlauch zwischen den Umlenkwalzen und Wendestangen sowie dem ortsfesten Vorzugswalzenpaar in zueinander parallelen, zur Flachlegedrehachse senkrechten Ebenen geführt wird.

Beispielsweise aus der US-PS 37 68 949 bekannte Vorrichtungen dieser Art dienen dazu, Dickstellen in der Schlauchfolienbahn beim Aufrollen nach Art des Seilwickelns zu verteilen, so daß sich zylindrische Wickelrollen herstellen lassen. Bei den bekannten Vorrichtungen bereitet es jedoch erhebliche Schwierigkeiten, nach dem Anfahren der Blasfolienanlage das extrudierte vordere Ende der Schlauchfolienbahn durch die Abquetschwalzen hindurch und anschließend zick-zack-förmig zwischen die Umlenkwalzen und Wendestangen hindurch und über die Abzugswalzen zu der Wickelvorrichtung zu führen. Dieser Einführungsvorgang ist insbesondere deshalb schwierig und erfordert ein erhebliches Geschick der Bedienungspersonen, weil aus der Extrusionsringdüse ständig ein schmelzflüssiger und anschließend weich-plastischer Folienschlauch nachgefördert wird, der zum Verkleben neigt.

Aufgabe der Erfindung ist es daher, eine Flachlege- und Abzugsvorrichtung der eingangs angegebenen Art zu schaffen, durch die sich beim Anfahren der Blasfolienanlage das vordere Ende der extrudierten Schlauchfolienbahn leichter hindurchführen läßt.

Erfindungsgemäß wird diese Aufgabe dadurch gelöst, daß die Träger etwa gleichlang ausgebildete seitliche Arme aufweisen, zwischen denen die Umlenkwalzen und Wendestangen gelagert sind, und daß die Umlenkwalzen und Wendestangen in Führungen der Arme von außen nach innen bzw. von innen nach außen verschiebbar und in ihren inneren und äußeren Stellungen verriegelbar sind. Vor dem Anfahren der Blasfolienanlage werden in der erfindungsgemäßen Vorrichtung die Wendestangen nach außen und die Umlenkwalzen nach innen gefahren, so daß das vordere Ende der extrudierten Schlauchfolienbahn geradlinig zwischen diesen hindurchgeführt werden kann. Ist die Schlauchfolienbahn zwischen die Abquetschwalzen und in der beschriebenen Weise zwischen die Umlenkwalzen und Wendestangen und anschließend über die Abzugswalzen zu der Wickelvorrichtung geführt worden, werden vor dem Einschalten des reversierenden Antriebs die Wendestangen nach innen und die Umlenkwalzen nach außen gefahren, so daß sie die Schlauchfolienbahn zieharmonikaartig zwischen sich ausziehen. Sobald der Ausziehvorgang beendet ist, kann mit dem reversierenden Wickelbetrieb begonnen werden.

Die erfindungsgemäße Vorrichtung erleichtert nicht nur das Einziehen des vorderen Endes der Schlauchfolienbahn beim Anfahren der Blasfolienanlage wesentlich, sie verringert auch die Menge des sonst anfallenden Ausschusses wesentlich.

Zum Verschieben der Umlenkwalzen und Wendestangen bzw. von deren Lagern in den Führungen können Antriebe, beispielsweise Spindeltriebe, vorgesehen werden.

Zweckmäßigerweise können die Lager der oberen Wendestange mit ausschwenkbaren Hebeln versehen sein, zwischen deren Endbereichen eine Stützwalze drehbar gelagert ist. Die Walze verringert die Reibung der sonst über die Wendestange gezogenen Schlauchfolienbahn. Nach dem ersten Einziehen der Schlauchfolienbahn kann die Stützwalze vor dem Zurückfahren der Wendestange in ihre innere Betriebsstellung in ihre unwirksame Position zwischen den seitlichen Armen geschwenkt werden.

Nach einer erfinderischen Ausgestaltung ist vorgesehen, daß im Maschinengestell oberhalb der Umlenkwalzen und Wendestangen je eine Spule zwischen diesen und außerhalb der Abzugswalzen zum Zwecke des Abwerfens lösbar gehaltert ist, wobei auf die Spulen Zugbänder aufgewickelt sind, die zwischen den Spulen miteinander verbunden sind. Zu Beginn des Anfahrvorgangs wird die innere Spule zwischen die nach außen gefahrenen Wendestangen und nach innen geschobenen Umlenkwalzen hindurchgeworfen und durch den Spalt der Abquetschwalzen hindurchgeführt, so daß das vordere Ende des aufgespulten Zugbandes mit dem vorderen Ende der gerade extrudierten Schlauchfolienbahn verbunden werden kann. Die andere Spule wird auf den Boden im Bereich der Wickelvorrichtung geworfen, so daß durch einfaches Ziehen an dem Zugband das Einziehen des vorderen Endes der extrudierten Schlauchfolienbahn erfolgen kann.

Dabei kann jeweils eine Reihe von Spulen auswerfbar in je einem kassettenartigen Magazin gehalten sein.

Zweckmäßigerweise ist eine der Abquetschwalzen von der anderen abrückbar angeordnet, so daß die Spule in einfacher Weise auch zwischen die Abquetschwalzen hindurchgeführt werden kann.

In weiterer Ausgestaltung der Erfindung ist vorgesehen, daß unterhalb der zwischen den Umlenkwalzen und Wendestangen angeordneten Spule eine in Richtung auf den Spalt der Abquetschwalzen verlaufende rampenförmige Platte angeordnet ist, auf der ein die abgeworfene Spule in den Walzenspalt fördernder Schieber geführt ist. Mit diesem Schieber läßt sich der Einführungsvorgang weiter vereinfachen, weil ein manuelles Hindurchführen des Zugbandes zwischen die Abzugswalzen entfällt.

Zweckmäßigerweise ist der Schieber zur Bildung eines Auffangtrichters mit Seitenwänden versehen.

Ein Ausführungsbeispiel der Erfindung wird nachstehend anhand der Zeichnung näher erläutert. In dieser zeigt

Fig. 1 eine Seitenansicht der reversierenden Flachlege- und Abzugsvorrichtung mit in der Anfahrstellung befindlichen Umlenkwalzen und Wendestangen in schematischer Darstellung,

Fig. 2 eine der Fig. 1 entsprechende Darstellung der Vorrichtung in ihrer Betriebsstellung,

Fig. 3 einen Querschnitt durch den auf einer rampenförmigen Bodenplatte geführten Schieber und

Fig. 4 eine Draufsicht auf die Spulenmagazine.

Das Gestell 1 der Flachlege- und Abzugsvorrichtung ist auf einer Zwischendecke 2 des Fabrikationsgebäudes befestigt, wobei die Zwischendecke 2 mit einem Durchbruch 3 für den Rahmen 4 der Flachlegevorrichtung 5 versehen ist, die senkrecht oberhalb der ringförmigen Extrusionsdüse des nicht dargestellten Blasfolienextruders angeordnet ist. Der Rahmen 4 der Flachlegevorrichtung 5 ist zusammen mit den Abquetschwalzen 6, 7 um etwa 360° um die Achse 8 der zugeführten Schlauchfolie schwenkbar gelagert. Auf der vertikalen Schwenkwelle 9, mit der der Rahmen 4 der Flachlege- und Abzugsvorrichtung verbunden ist, sind die Träger 10, 12 der Wendestangen 13, 14 und der Träger 11 für die Umlenkwalze 15 schwenkbar gelagert. Die Arme 16 der Umlenkwalze 17 sind unmittelbar mit dem Rahmen 4 verbunden, so daß diese mit diesem schwenken.

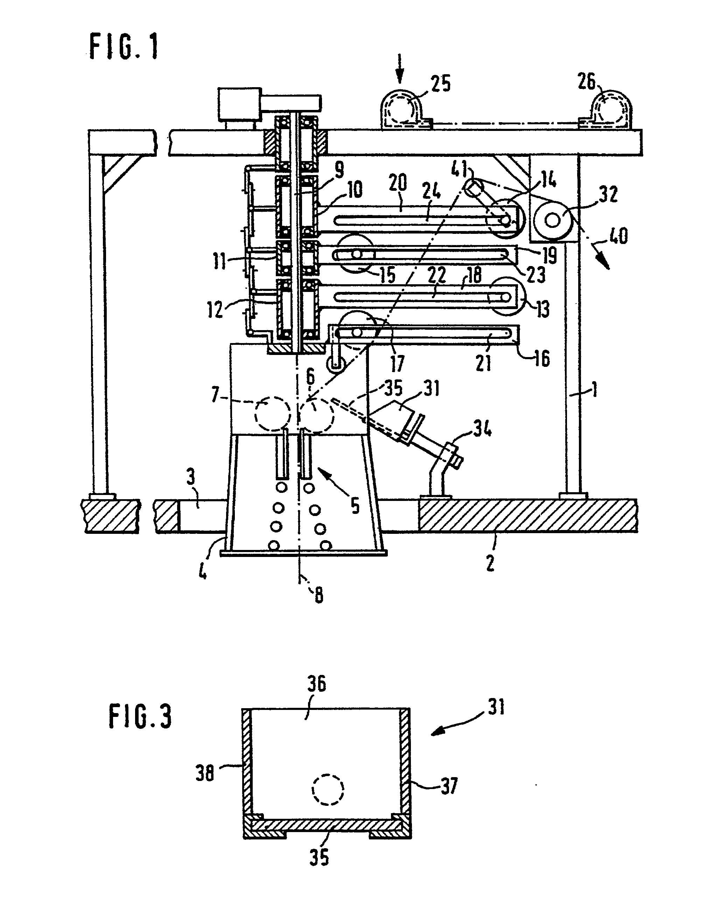

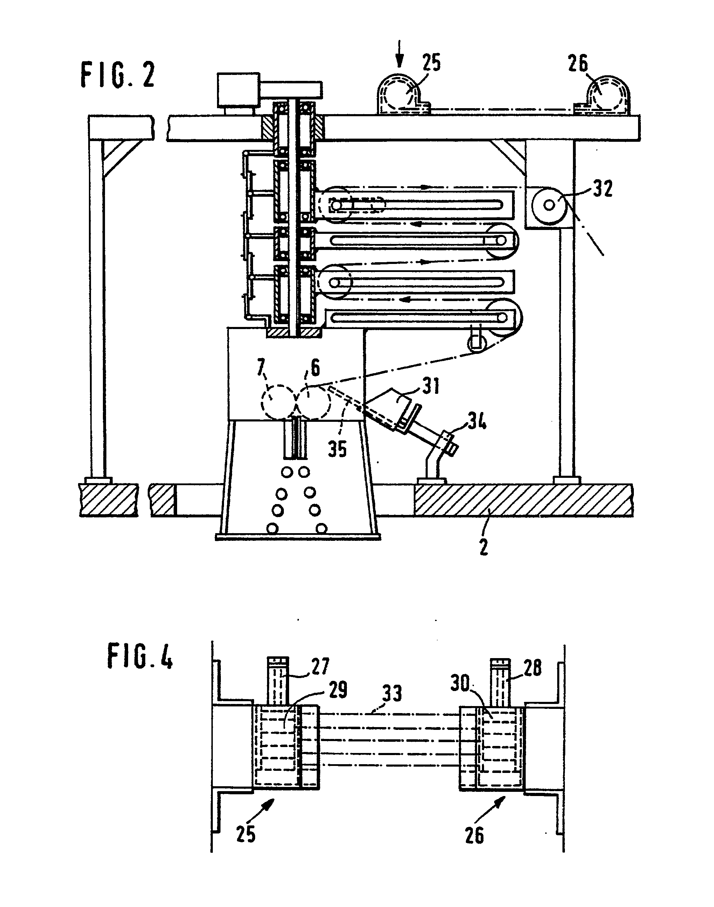

In ihrem grundsätzlichen Aufbau entspricht die Flachlege- und Abzugsvorrichtung nach den Figuren 1 und 2 der in der US-PS 37 68 949 beschriebenen, so daß auf diese zur näheren Erläuterung Bezug genommen wird.

Der grundsätzliche Unterschied zwischen der aus der US-PS 37 68 949 bekannten Vorrichtung und der Flachlege- und Abzugsvorrichtung nach den Fig. 1 und 2 besteht darin, daß die Träger 10, 11, 12 und der Rahmen 4 mit etwa gleichlangen seitlichen Armen 16, 18, 19, 20 versehen sind, zwischen denen die Wendestangen 14 und 13 sowie die Umlenkwalzen 15, 17 gehaltert bzw. gelagert sind. Die seitlichen Arme 16, 18, 19, 20 sind mit längsverlaufenden Führungsnuten 21, 22, 23, 24 versehen, in denen die Lager für die Umlenkwalzen 15, 17 und die Halterungen für die Wendestangen 13, 14 längsverschieblich geführt sind. Die Wendestangen 13, 14 sind in ihren Halterungen undrehbar gehaltert, während die Umlenkwalzen 15, 17 drehbar gelagert sind.

Oberhalb der Wendestangen und Umlenkwalzen sind auf dem Maschinengestell zwei kassettenartige Magazine 25, 26 angeordnet, in denen auf Zapfen 27, 28, die auch aus einziehbaren Kolbenstangen bestehen können, mehrere Spulen 29, 30 gehaltert sind. Die Kassette 25 ist zwischen den Wendestangen und Umlenkwalzen oberhalb eines trichterförmigen Schiebers 31 angeordnet, der nachstehend noch näher beschrieben wird. Das kassettenartige Magazin 26 ist außerhalb der Vorzugswalzen 32 angeordnet, von denen nur eine dargestellt ist. Auf die Spulen 29, 30 sind miteinander verbundene Zugbänder 33 aufgespult.

Auf der Zwischendecke 2 ist ein Träger 34 befestigt, mit dem ein in der dargestellten Weise schräg zu dem Walzenspalt der Abquetschwalzen 6, 7 führendes Bodenblech 35 befestigt ist. Auf den seitlichen Rändern dieses Bodenbleches 35 ist in der aus Fig. 3 ersichtlichen Weise der Schieber 31 verschieblich geführt. Dieser besteht aus einer Rückwand 36 und Seitenwänden 37, 38. Weiterhin ist der Schieber in nicht dargestellter Weise mit einem Pneumatikzylinder verbunden.

Die Lager der Abquetschwalze 7 sind in nicht dargestellter Weise verschieblich angeordnet, so daß der Spalt zwischen den Abquetschwalzen in der aus Fig. 1 ersichtlichen Weise geöffnet werden kann.

In Fig. 1 ist die Vorrichtung in ihrer Anfahrstellung und in Fig. 2 in ihrer Betriebsstellung dargestellt. Zum Zwecke des Anfahrens werden in der aus Fig. 1 ersichtlichen Weise die Umlenkwalzen in den Führungen 21, 23 nach innen und die Wendestangen in den Führungen 22, 24 nach außen gefahren. Der Spalt zwischen den Abquetschwalzen 6, 7 wird durch Ausrücken der Abquetschwalze 7 so weit vergrößert, daß eine Spule 29 durch den Spalt hindurchgeworfen werden kann. Nachdem die Vorrichtung in der aus Fig. 1 ersichtlichen Weise vorbereitet worden ist, wird aus dem kassettenartigen Magazin 25 eine Spule 29 in den trichterförmigen Schieber 31 geworfen. Durch Betätigung des Schiebers wird die Spule durch den geöffneten Spalt der Abquetschwalzen hindurchgeführt, so daß sie in den Bereich des Extrusionsringes des Blasfolienextruders gelangt. Dort wird die Spule abgenommen und das Zugband in üblicher Weise mit dem extrudierten vorderen Ende der Schlauchfolienbahn verbunden. Aus dem kassettenartigen Magazin 26 ist die andere Spule 30 auf den Zwischenboden 2 in den Bereich der nicht dargestellten Wickelvorrichtung geworfen worden, so daß das vordere Ende der extrudierten Schlauchfolienbahn in Richtung des Pfeils 40 zu der Wickelvorrichtung gezogen werden kann. Nachdem in dieser Weise die Schlauchfolienbahn eingezogen worden ist, werden die Wendestangen und Umlenkwalzen in ihre aus Fig. 2 ersichtliche Betriebsstellung gefahren und in dieser gehalten. Die Stützwalze 41 wird in ihre zwischen den Armen 20 befindliche unwirksame Stellung geschwenkt. Nachdem in dieser Weise der Anfahrzustand durchgeführt worden ist, können die im Anfahrzustand übereinander liegenden Arme der Wendestangen und Umlenkwalzen verschwenkt und der reversierende Antrieb eingeschaltet werden.

**Patentansprüche**

1. Flachlege- und Abzugsvorrichtung für im Blasverfahren von einem ortsfest angeordneten Folienblaskopf hergestellte Kunststoffschlauchfolienbahnen, deren Flachlegeplatten und Abquetschwalzen über mindestens annahernd 360° reversierend um die Achse des zugeführten Folienschlauches schwenkbar sind, wobei zwischen den Flachlegeplatten und Abquetschwalzen einerseits und dem ortsfesten Vorzugswalzenpaar andererseits mindestens zwei Umlenkwalzen zum Umlenken der Bahn um etwa 180° und zwei Wendestangen zum Umlenken der Bahn um etwa 180° unter gleichzeitiger Richtungsänderung hintereinander und miteinander abwechselnd auf um die Drehachse der Flachlegeplatten gegeneinander verschwenkbaren Trägern derart gelagert sind, daß die Achsen der Umlenkwalzen und der Wendestangen tangential zu Kreisen um die Drehachse der Flachlegeplatten verlaufen, wobei die Umlenkwalzen sich in jeder möglichen Betriebsstellung radial außerhalb der von der Bahn umschlungenen Teile der Wendestangen befinden, wobei die Schwenkwinkel der Umlenkwalzen bzw. Wendestangen mit steigender Entfernung von den Abzugswalzen abnehmen und wobei der Folienschlauch zwischen den Umlenkwalzen und Wendestangen sowie dem ortsfesten Vorzugswalzenpaar in zueinander parallelen, zur Flachlegedrehachse senkrechten Ebenen geführt wird, **dadurch gekennzeichnet,** daß die Träger (4, 10, 11, 12) etwa gleichlang ausgebildete seitliche Arme (16, 18, 19, 20) aufweisen, zwischen denen die Wendestangen (13, 14) gehalten und die Umlenkwalzen (15, 17) gelagert sind und daß die Umlenkwalzen (15, 17) und die Wendestangen (13, 14) in Führungen (21, 22, 23, 24) der Arme von außen nach innen bzw. von innen nach außen verschiebbar und in ihren inneren und äußeren Stellungen verriegelbar sind.

2. Flachlege- und Abzugsvorrichtung nach Anspruch 1, **dadurch gekennzeichnet,** daß zum Verschieben der Umlenkwalzen (15, 17) und der Wendestangen (13, 14) bzw. von deren Lagern in den Führungen (21 bis 24) Antriebe, beispielsweise Spindeltriebe, vorgesehen sind.

3. Flachlege- und Abzugsvorrichtung nach Anspruch 1 oder 2, **dadurch gekennzeichnet,** daß die Lager der oberen Wendestange (14) mit ausschwenkbaren Hebeln versehen sind, zwischen deren Endbereichen eine Stützwalze (41) drehbar gelagert ist.

4. Flachlege- und Abzugsvorrichtung nach einem der Ansprüche 1 bis 3, **dadurch gekennzeichnet,** daß im Maschinengestell (1) oberhalb der Umlenkwalzen und Wendestangen je eine Spule (29, 30) zwischen diesen und außerhalb der Abzugswalzen (32) zum Zwecke des Abwerfens lösbar gehaltert ist und daß auf die Spulen (29, 30) Zugbänder (33) aufgewickelt sind, die zwischen den Spulen miteinander verbunden sind.

5. Flachlege- und Abzugsvorrichtung nach einem der vorhergehenden Ansprüche, **dadurch gekennzeichnet,** daß jeweils eine Reihe von Spulen auswerfbar in je einem kassettenartigen Magazin (25, 26) gehalten ist.

6. Flachlege- und Abzugsvorrichtung nach einem der vorhergehenden Ansprüche, **dadurch gekennzeichnet,** daß eine der Abquetschwalzen (6, 7) von der anderen abrückbar angeordnet ist.

7. Flachlege- und Abzugsvorrichtung nach einem der vorhergehenden Ansprüche, **dadurch gekennzeichnet,** daß unterhalb der zwischen den Umlenkwalzen und Wendestangen angeordneten Spule (29) eine in Richtung auf den Spalt in Abquetschwalzen (6, 7) verlaufende rampenförmige Platte (35) angeordnet ist, auf der ein die abgeworfene Spule (29) den Walzenspalt fördernder Schieber (31) geführt ist.

8. Flachlege- und Abzugsvorrichtung nach Anspruch 7, **dadurch gekennzeichnet,** daß der Schieber zur Bildung eines Auffangtrichters mit Seitenwänden (37, 38) versehen ist.

**Claims**

1. A flat laying and take-off apparatus for tubular plastic film webs produced by the inflation extrusion method by a fixedly arranged film blowing extrusion head, whose flat laying plates and squeeze rollers can be reversibly pivoted through at least approximately 360° round the axis of the fed tubular film, wherein at least two guide rollers for deflecting the web by approximately 180° and two turning bars for deflecting the web by approximately 180° with a simultaneous change in direction are mounted between the flat laying plates and the squeeze rollers on the one hand, and the fixed feeding roller pair on the other hand, one behind the other and alternating with each other, on supports pivotable towards each other round the axis of rotation of the flat laying plates, in such a way that the axes of the guide rollers and of the turning bars extend tangentially to circles around the axis of rotation of the flat laying plates, wherein the guide rollers are located radially outside the parts of the turning bars in any possible operational position surrounded by the web, wherein the pivoting angles of the guide rollers or the turning bars decline as the distance from the take-off rollers increases, and wherein the tubular film is carried between the guide rollers and the turning bars and the fixed feeding roller pair in planes that are parallel to each other and perpendicular to the flat laying axis of rotation, characterized in that the supports (4, 10, 11, 12) have lateral arms (16, 18, 19, 20) that are approximately equal in length, the turning bars (13, 14) being held in position and the guide rollers (15, 17) being mounted between the bars, and in that the guide rollers (15, 17) and the turning bars (13, 14) are displaceable in guideways (21, 22, 23, 24) of the arms from the outside inwards or from the inside outwards and in that they are lockable in their inner and outer positions.

2. A flat laying and take-off apparatus according to claim 1, characterized in that provision is made for drives, for example, screw drives, for the displacement of the guide rollers (15, 17) and the turning bars (13, 14) or of their bearings in the guideways (21 to 24).

3. A flat laying and take-off apparatus according to claim 1 or 2, characterized in that the bearings of the upper turning bar (14) are provided with outwardly swingable levers, between whose end zones a supporting roller (41) is mounted for rotation.

4. A flat laying and take-off apparatus according to one of claims 1 to 3, characterized in that in the machine frame (1), above the guide rollers and turning bars one reel (29, 30) each is detachably held between them and outside the take-off rollers (32) for ejection purposes, and in that pull tapes (33) are wound up on the reels (29, 30), which tapes are interconnected between the reels.

5. A flat laying and take-off apparatus according to one of the preceding claims, characterized in that one series of reels respectively is held in one cassette-type magazine (25, 26) each for ejection.

6. A flat laying and take-off apparatus according to one of the preceding claims, characterized in that one of the squeeze rollers (6, 7) is arranged to be removable from the other.

7. A flat laying and take-off apparatus according to one of the preceding claims, characterized in that beneath the reel (29) disposed between the guide rollers and turning bars there is arranged a ramp-shaped plate (35) extending towards the gap in the squeeze rollers (6, 7), on which plate there is carried a pusher (31) delivering the ejected reel into the roller gap.

8. A flat laying and take-off apparatus according to claim 7, characterized in that the pusher is provided with side walls (37, 38) to form a receiving hopper.

## Revendications

1. Dispositif de mise à plat et d'enlèvement pour des films plastiques tubulaires réalisés par extrusion-soufflage par une tête de soufflage de film disposée à poste fixe, dont les plaques de mise à plat et les rouleaux écraseurs peuvent pivoter de façon réversible d'un angle au moins approximativement égal à 360° autour de l'axe du film tubulaire amené, dans lequel il est prévu entre les plaques de mise à plat et rouleaux écraseurs, d'une part, et la paire de rouleaux avanceurs montés à poste fixe, d'autre part, au moins deux rouleaux de renvoi pour faire effectuer au film un changement de direction d'environ 180° et deux barres de retournement pour retourner le film d'au moins 180° tout en modifiant sa direction, qui sont montés alternativement l'un derrière l'autre et l'un avec l'autre sur des supports pouvant pivoter l'un par rapport à l'autre autour de l'axe de rotation des plaques de mise à plat de telle façon que les axes des rouleaux de renvoi et des barres de retournement sont dirigés tangentiellement à des cercles entourant l'axe de rotation des plaques de mise à plat, les rouleaux de renvoi se trouvant, quelle que soit la position de fonctionnement, à l'extérieur dans le sens radial des parties de barres de retournement en contact avec le film, les angles de pivotement des rouleaux de renvoi et des barres de retournement augmentant au fur et à mesure que l'éloignement par rapport aux rouleaux avanceurs s'accroît, et le film tubulaire étant guidé entre les rouleaux de renvoi et barres de retournement d'une part et la paire de rouleaux avancés montée à poste fixe, d'autre part, dans des plans parallèles entre eux et perpendiculaires à l'axe de rotation de mise à plat, caractérisé en ce que les supports (4, 10, 11, 12) possèdent des bras latéraux (16, 18, 19, 20) ayant sensiblement la même longueur entre lesquels sont montés les barres de retournement (13, 14) et les rouleaux de renvoi (15, 17), et que les rouleaux de renvoi (15, 17) et les barres de retournement (13, 14) peuvent coulisser dans des guidages (21, 22, 23, 24) des bras, de l'extérieur vers l'intérieur et de l'intérieur vers l'extérieur, et peuvent être verrouillés dans leurs positions intérieures et extérieures.

2. Dispositif de mise à plat et d'enlèvement selon la revendication 1, caractérisé en ce que, pour le déplacement des rouleaux de renvoi (15, 17) et des barres de retournement (13, 14) ou de leurs paliers dans les guidages (21 à 24), il est prévu des mécanismes de commande, par exemple des commandes à broche.

3. Dispositif de mise à plat et d'enlèvement selon la revendication 1 ou 2, caractérisé en ce que les paliers de la barre de retournement (14) supérieurs sont pourvus de leviers pivotants entre les parties terminales desquels est monté rotatif un cylindre d'appui (41).

4. Dispositif de mise à plat et d'enlèvement selon une quelconque des revendications 1 à 3, caractérisé en ce qu'aux fins d'éjection, deux bobines (29, 30) sont fixées de façon détachable respectivement au-dessus des rouleaux de renvoi et des barres de retournement, entre ceux-ci et à l'extérieur des rouleaux d'enlèvement (32), et que, sur les bobines (29, 30) sont enroulés des rubans de traction (33) qui sont reliés entre eux entre les bobines.

5. Dispositif de mise à plat et d'enlèvement selon une quelconque des revendications précédentes, caractérisé en ce que, dans chacun de deux magasins (25, 26) en forme de cassette est disposée de façon éjectable une file de bobines.

6. Dispositif de mise à plat et d'enlèvement selon une quelconque des revendications précédentes, caractérisé en ce que l'un des rouleaux écraseurs (6, 7) est disposé pour pouvoir être écarté de l'autre.

7. Dispositif de mise à plat et d'enlèvement selon une quelconque des revendications précédentes, caractérisé en ce qu'il est prévu en dessous de la bobine (29) disposée entre les rouleaux de renvoi et barres de retournement une plaque (35) en forme de rampe, dirigée vers la fente entre les rouleaux écraseurs (6, 7), sur laquelle est guidée une coulisse (31) poussant dans la fente entre les rouleaux la bobine (29) éjectée.

8. Dispositif de mise à plat et d'enlèvement selon la revendication 7, caractérisé en ce que la coulisse est pourvue de parois latérales (37, 38) pour former une trémie collectrice.

FIG.1

FIG.3

FIG. 2

FIG. 4